# EUROPÄISCHE PATENTSCHRIFT

(11) **EP 3 847 507 B1**
(45) Veröffentlichungstag und Bekanntmachung des Hinweises auf die Patenterteilung: **17.11.2021**
(21) Anmeldenummer: 19786272.5
(22) Anmeldetag: 20.09.2019
(51) Int. Cl.: G05B 13/02, G05B 19/19, G05B 19/404, H02P 6/10, H02P 23/04

(54) **LAGEGEREGELTE STEUERUNG MIT KOMPENSATION VON ELASTIZITÄTSBEDINGTEN LAGEFEHLERN**
POSITION-CONTROLLED CONTROL WITH COMPENSATION OF ELASTICITY-INDUCED POSITION ERRORS
COMMANDE À RÉGULATION DE POSITION À COMPENSATION D'ERREURS DE POSITION INHÉRENTES À L'ÉLASTICITÉ

(30) Priorität: 18.12.2018 EP 18213565
(43) Veröffentlichungstag der Anmeldung: 14.07.2021
(73) Patentinhaber: Siemens Aktiengesellschaft, 80333 München (DE)
(72) Erfinder: KLOTZEK, Andreas, 91052 Erlangen (DE)
(86) Internationale Anmeldenummer: PCT/EP2019/075291
(87) Internationale Veröffentlichungsnummer: WO 2020/126133

(56) Entgegenhaltungen:
- EP-A1- 3 208 669
- EP-A2- 0 851 571
- DE-T2- 69 700 223
- US-A1- 2012 306 411
- YUGO TADANO ET AL: "Periodic learning suppression control of torque ripple utilizing system identification for permanent magnet synchronous motors", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 1363-1370, XP031729726, ISBN: 978-1-4244-5394-8

## Beschreibung

Die vorliegende Erfindung geht aus von einem Steuerverfahren für eine Maschine, die mindestens eine lagegeregelte Achse aufweist,
- wobei einer Steuereinrichtung der Maschine eine Abfolge von Steuerbefehlen vorgegeben wird, die für die mindestens eine lagegeregelte Achse eine Abfolge von idealen Lagesollwerten festlegen,
- wobei die Abfolge von idealen Lagesollwerten eine Anzahl von aufeinanderfolgenden Abschnitten aufweist,
- wobei innerhalb eines jeweiligen Abschnitts der Abfolge von idealen Lagesollwerten die idealen Lagesollwerte entweder monoton ansteigend oder monoton absteigend sind,
- wobei von Abschnitt zu Abschnitt der Abfolge von idealen Lagesollwerten die Differenz unmittelbar aufeinanderfolgender idealer Lagesollwerte ihr Vorzeichen wechselt,
- wobei die Steuereinrichtung für die mindestens eine lagegeregelte Achse einen Lageregler implementiert,
- wobei die Steuereinrichtung dem Lageregler entsprechend der Abfolge von idealen Lagesollwerten eine Abfolge von resultierenden Lagesollwerten und einen jeweiligen Lageistwert zuführt,
- wobei der Lageregler anhand des ihm zugeführten jeweiligen resultierenden Lagesollwertes und des ihm zugeführten jeweiligen Lageistwertes ein jeweiliges erstes Stellsignal für einen Aktor der mindestens einen Achse ermittelt und dadurch direkt oder indirekt eine Lage der mindestens einen Achse entsprechend dem jeweiligen resultierenden Lagesollwert regelt,
- wobei der jeweilige resultierende Lagesollwert sich durch Addition eines jeweiligen Zusatzsollwerts auf den jeweiligen idealen Lagesollwert ergibt,
- wobei innerhalb der Abschnitte der Abfolge von idealen Lagesollwerten der jeweilige Zusatzsollwert positiv ist, wenn die idealen Lagesollwerte monoton ansteigend sind, und negativ ist, wenn die idealen Lagesollwerte monoton absteigend sind.

Die vorliegende Erfindung geht weiterhin aus von einem Steuerprogramm für eine Steuereinrichtung einer Maschine, die mindestens eine lagegeregelte Achse aufweist, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung die mindestens eine lagegeregelte Achse gemäß einem derartigen Steuerverfahren steuert.

Die vorliegende Erfindung geht weiterhin aus von einer Steuereinrichtung einer Maschine, die mindestens eine lagegeregelte Achse aufweist, wobei die Steuereinrichtung mit einem derartigen Steuerprogramm programmiert ist, wobei die Steuereinrichtung im Betrieb die mindestens eine lagegeregelte Achse der Maschine gemäß einem derartigen Steuerverfahren steuert.

Die vorliegende Erfindung geht weiterhin aus von einer Maschine, wobei die Maschine mindestens eine lagegeregelte Achse aufweist, wobei die Maschine eine derartige Steuereinrichtung aufweist, so dass die Steuereinrichtung im Betrieb die mindestens eine lagegeregelte Achse der Maschine gemäß einem derartigen Steuerverfahren steuert.

Bei der Lageregelung von Achsen treten in aller Regel durch Reibung bedingte Kräfte auf. Um eine tatsächliche Verfahrbewegung zu bewirken, müssen diese Reibungskräfte überwunden werden. Weiterhin weist keine mechanische Struktur - auch nicht eine Achse einer Werkzeugmaschine, eines Roboters oder einer anderen Produktionsmaschine - eine unendliche Steifigkeit auf. Es tritt daher eine - wenn auch nur relativ geringe - elastische Verformung auf.

Lagegeber, welche die Lage eines mittels der Achse bewegten Objekts erfassen (beispielsweise eines TCP = Tool Center Point), erfassen genau genommen nicht die Lage des Objekts, sondern die Stellung des Aktors, also des Antriebs des mittels der Achse bewegten Objekts. Wenn der Lagegeber eine Lage anzeigt, die exakt einer vorgegebenen Solllage entspricht, weicht die tatsächliche Lage des mittels der Achse bewegten Objekts von der Solllage um die elastische Verformung ab. In Fachkreisen wird dieser Effekt üblicherweise als "verlorene Bewegung" oder lost motion bezeichnet.

Um die tatsächliche Lage des Objekts dennoch erfassen zu können, wird in manchen Fällen ein weiteres Messsystem verwendet, welches möglichst nahe am bewegten Objekt - beispielsweise dem erwähnten TCP - angeordnet ist. In vielen Fällen ist die Anordnung eines derartigen Messsystems in der Nähe des bewegten Objekts jedoch nicht möglich oder wird nicht vorgenommen. In diesem Fall muss die sogenannte verlorene Bewegung hingenommen werden.

Im Stand der Technik sind auch schon verschiedene Arten von Kompensationen angedacht worden. Insbesondere ist es bei Achsen, die ein Getriebe enthalten, bekannt, das Getriebespiel, das bei einer Richtungsänderung der Bewegung auftritt, durch einen Zusatzsollwert zu kompensieren, der auf den Lagesollwert (oder mit inversem Vorzeichen auf den Lageistwert) aufaddiert wird. Bei dieser Vorgehensweise weisen die Zusatzsollwerte innerhalb eines jeweiligen Abschnitts der Abfolge von idealen Lagesollwerten einen konstanten Wert auf. Diese Vorgehensweisen führen oftmals aber zu mehr Problemen als sie lösen.

Aus der EP 3 208 669 A1 ist ein Steuerverfahren für eine Maschine bekannt, die mindestens eine lagegeregelte Achse aufweist. Die Achse ist eine Rundachse, so dass die Lage eine Drehstellung ist. Der Steuereinrichtung der Maschine wird eine Abfolge von Steuerbefehlen vorgegeben, die für die mindestens eine lagegeregelte Achse eine Abfolge von idealen Lagesollwerten festlegt. Die Steuereinrichtung implementiert für die mindestens eine lagegeregelte Achse einen Lageregler und führt dem Lageregler entsprechend der Abfolge von idealen Lagesollwerten eine Abfolge von resultierenden Lagesollwerten und einen jeweiligen Lageistwert zu. Der jeweilige resultierende Lagesollwert ergibt sich durch Addieren eines Korrekturwerts zum jeweiligen idealen Lagesollwert. Der Korrekturwert ist sowohl von der Drehstellung als auch von der Drehzahl der lagegeregelten Achse abhängig.

Die Aufgabe der vorliegenden Erfindung besteht darin, Möglichkeiten zu schaffen, mittels derer nicht nur bei Achsen, die ein Getriebe enthalten, sondern allgemein bei Achsen eine gute Kompensation einer verlorenen Bewegung möglich ist.

Die Aufgabe wird durch ein Steuerverfahren mit den Merkmalen des Anspruchs 1 gelöst. Vorteilhafte Ausgestaltungen des erfindungsgemäßen Steuerverfahrens sind Gegenstand der abhängigen Ansprüche 2 bis 9.

Erfindungsgemäß wird ein Steuerverfahren der eingangs genannten Art dadurch ausgestaltet,
- dass die Zusatzsollwerte einen ersten Anteil umfassen, der ausschließlich von einer Lagedifferenz abhängig ist,
- dass die Lagedifferenz entweder die Differenz des jeweiligen idealen Lagesollwerts vom ersten idealen Lagesollwert des jeweiligen Abschnitts oder die Differenz des jeweiligen idealen Lagesollwerts vom jeweiligen Lageistwert ist und
- dass der Betrag des ersten Anteils der Zusatzsollwerte mit zunehmendem Betrag der Lagedifferenz anfänglich streng monoton und später zumindest monoton ansteigt.

Durch das Aufschalten der Zusatzsollwerte wird die mindestens eine lagegeregelte Achse somit scheinbar über ihre eigentliche Solllage hinaus gefahren. Da die Achse jedoch dem Ausgangssignal des am Aktor angeordneten Lagegebers sozusagen hinterherhinkt, wird bei geeigneter Wahl der Zusatzsollwerte genau die gewünschte Position angefahren. Durch das sanfte, allmähliche Aufschalten des jeweiligen Zusatzsollwertes auf den jeweiligen idealen Lagesollwert werden jedoch abrupte Sollwertsprünge vermieden. Die im Ergebnis bewirkte Bewegung der Achse wird sanfter und weicher.

Vorzugsweise nimmt der Betrag des ersten Anteils einen vorbestimmten Maximalwert an, sobald der Betrag der Lagedifferenz eine Schranke erreicht, und wird danach innerhalb des jeweiligen Abschnitts der Abfolge von idealen Lagesollwerten konstant beibehalten. Dadurch kann insbesondere der sogenannte Schleppfehler in nahezu idealer Weise kompensiert werden.

Vorzugsweise weist der erste Anteil zu Beginn des jeweiligen Abschnitts der Abfolge von idealen Lagesollwerten den Wert Null auf. Durch diese Vorgehensweise wird insbesondere ein stetiger Übergang zu der Kompensation des Schleppfehlers erreicht.

Weiterhin ist es von Vorteil, wenn die Zusatzsollwerte einen zweiten Anteil umfassen, der von einer Verfahrgeschwindigkeit der mindestens einen Achse abhängig ist. Der zweite Anteil kann insbesondere proportional zur Verfahrgeschwindigkeit der mindestens einen Achse sein. Dieser Ansatz beruht auf dem Umstand, dass Reibungskräfte oftmals einen geschwindigkeitsabhängigen Anteil aufweisen. Somit tritt zusätzlich zu einer kraftbedingten verlorenen Bewegung auch eine geschwindigkeitsbedingte verlorene Bewegung auf. Durch den zweiten Anteil kann der geschwindigkeitsbedingte Anteil der verlorenen Bewegung in nahezu idealer Weise kompensiert werden. Das Vorsehen des zweiten Anteils ist prinzipiell alternativ zum Vorsehen des ersten Anteils möglich. In der Regel ist der zweite Anteil aber zusätzlich zum ersten Anteil vorhanden.

In der Regel implementiert die Steuereinrichtung einen dem Lageregler unterlagerten Geschwindigkeitsregler. In diesem Fall führt der Lageregler das jeweilige erste Stellsignal nicht direkt dem Aktor zu. Vielmehr führt der Lageregler das jeweilige erste Stellsignal dem Geschwindigkeitsregler einen resultierenden Geschwindigkeitssollwert und weiterhin einen jeweiligen Geschwindigkeitsistwert zu, wobei der jeweilige resultierende Geschwindigkeitssollwert von dem jeweiligen ersten Stellsignal abhängt. In diesem Fall ermittelt der Geschwindigkeitsregler anhand des jeweiligen resultierenden Geschwindigkeitssollwertes und des jeweiligen Geschwindigkeitsistwertes ein jeweiliges zweites Stellsignal für den Aktor der mindestens einen Achse und regelt dadurch direkt oder indirekt die Geschwindigkeit der mindestens einen Achse entsprechend dem jeweiligen resultierenden Geschwindigkeitssollwert.

Im einfachsten Fall ist der resultierende Geschwindigkeitssollwert mit dem jeweiligen ersten Stellsignal identisch. In der Regel führt es aber zu einem besseren Steuerungsverhalten, wenn die Steuereinrichtung anhand der Abfolge von resultierenden Lagesollwerten ohne Berücksichtigung des jeweiligen Lageistwertes ein jeweiliges erstes Vorsteuersignal ermittelt und den jeweiligen resultierenden Geschwindigkeitssollwert durch Addition des ersten Vorsteuersignals auf den jeweiligen idealen Geschwindigkeitssollwert ermittelt.

In der Regel führt es zu einem noch besseren Steuerungsverhalten, wenn die Steuereinrichtung anhand der Abfolge von resultierenden Lagesollwerten ohne Berücksichtigung des jeweiligen Lageistwertes ein jeweiliges zweites Vorsteuersignal ermittelt und der Geschwindigkeitsregler das jeweilige zweite Stellsignal nicht direkt dem Aktor zuführt, sondern die Steuereinrichtung durch Addition des jeweiligen zweiten Vorsteuersignals auf das jeweilige zweite Stellsignal ein jeweiliges drittes Stellsignal für den Aktor ermittelt. Der Aktor wird in diesem Fall entsprechend dem jeweiligen dritten Stellsignal oder entsprechend einem aus dem jeweiligen dritten Stellsignal abgeleiteten jeweiligen vierten Stellsignal angesteuert.

Zu besonders guten Ergebnissen führt es, wenn die Steuereinrichtung anhand der Abfolge von Zusatzsollwerten ohne Berücksichtigung weiterer variabler Größen ein jeweiliges drittes Vorsteuersignal ermittelt und durch Addition des jeweiligen dritten Vorsteuersignals auf das jeweilige dritte Stellsignal das jeweilige vierte Stellsignal für den Aktor ermittelt. In diesem Fall wird der Aktor mit dem jeweiligen vierten Stellsignal angesteuert.

Die Addition des jeweiligen dritten Vorsteuersignals ist auch möglich, wenn das jeweilige erste Vorsteuersignal nicht auf das jeweilige erste Stellsignal und/oder das zweite Vorsteuersignal nicht auf das jeweilige zweite Stellsignal aufaddiert werden. In diesem Fall ermittelt die Steuereinrichtung durch Addition des jeweiligen dritten Vorsteuersignals auf das jeweilige zweite Stellsignal ein jeweiliges resultierendes Stellsignal für den Aktor, mit dem der Aktor angesteuert wird.

Die Aufgabe wird weiterhin durch ein Steuerprogramm mit den Merkmalen des Anspruchs 10 gelöst. Erfindungsgemäß wird ein Steuerprogramm der eingangs genannten Art derart ausgestaltet, dass die Abarbeitung des Maschinencodes durch die Steuereinrichtung bewirkt, dass die Steuereinrichtung die mindestens eine lagegeregelte Achse gemäß einem erfindungsgemäßen Steuerverfahren steuert.

Die Aufgabe wird weiterhin durch eine Steuereinrichtung mit den Merkmalen des Anspruchs 11 gelöst. Erfindungsgemäß wird eine Steuereinrichtung der eingangs genannten Art mit einem erfindungsgemäßen Steuerprogramm programmiert, so dass die Steuereinrichtung im Betrieb die mindestens eine lagegeregelte Achse gemäß einem erfindungsgemäßen Steuerverfahren steuert.

Die Aufgabe wird weiterhin durch eine Maschine mit den Merkmalen des Anspruchs 12 gelöst. Erfindungsgemäß ist die Steuereinrichtung der Maschine erfindungsgemäß ausgebildet, so dass die Steuereinrichtung im Betrieb die mindestens eine lagegeregelte Achse gemäß einem erfindungsgemäßen Steuerverfahren steuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine mit mehreren lagegeregelten Achsen,
- FIG 2: eine Abfolge von idealen Lagesollwerten,
- FIG 3: eine Lageregelung einer einzelnen lagegeregelten Achse,
- FIG 4: einen funktionalen Verlauf eines ersten Anteils eines Zusatzsollwertes,
- FIG 5: den funktionalen Verlauf von FIG 4 für positive und negative Lagedifferenzen,
- FIG 6: einen funktionalen Verlauf eines zweiten Anteils des Zusatzsollwertes und
- FIG 7 bis 9: Modifikationen der Lageregelung von FIG 3.

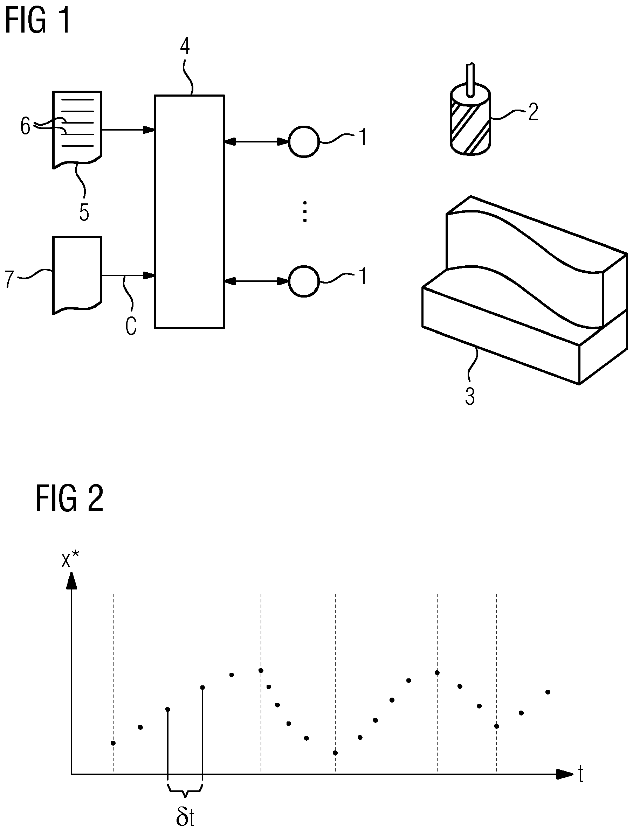

Gemäß FIG 1 weist eine Maschine mehrere lagegeregelte Achsen 1 auf. Bei der Maschine kann es sich beispielsweise entsprechend der Darstellung in FIG 1 um eine Werkzeugmaschine handeln, so dass mittels der lagegeregelten Achsen 1 ein Werkzeug 2 der Werkzeugmaschine relativ zu einem zu bearbeitenden Werkstück 3 translatorisch positioniert und/oder rotatorisch orientiert wird. Es kann sich bei der Maschine jedoch alternativ auch um eine andere Maschine handeln, beispielsweise um einen Knickarmroboter oder eine Handhabungsmaschine oder eine andere Produktionsmaschine. Entscheidend ist, dass die Maschine mindestens eine (im Sinne des Zahlwortes) lagegeregelte Achse 1 aufweist.

Die Maschine weist eine Steuereinrichtung 4 auf, welche die Maschine steuert. Die Steuereinrichtung 4 ist eine numerische Steuerung (CNC) oder eine Bewegungssteuerung. Eine Bewegungssteuerung ist von ihrer Funktion her gesehen mit einer numerischen Steuerung sehr ähnlich. Der Unterschied besteht im Wesentlichen nur in der Anwendung, nämlich bei einer numerischen Steuerung zur Steuerung einer Werkzeugmaschine, bei einer Bewegungssteuerung zur Steuerung eines Roboters oder einer anderen Maschine. In beiden Fällen - also sowohl bei einer numerischen Steuerung als auch bei einer Bewegungssteuerung - erfolgt jedoch eine lagegeregelte Steuerung mindestens einer lagegeregelten Achse 1, in der Regel mehrerer lagegeregelter Achsen 1.

Die Steuereinrichtung 4 ist softwareprogrammierbar. Die Steuereinrichtung 4 ist daher mit einem Steuerprogramm 5 programmiert. Das Steuerprogramm 5 entspricht einem Systemprogramm für die Steuereinrichtung 4. Es umfasst Maschinencode 6. Der Maschinencode 6 ist von der Steuereinrichtung 4 unmittelbar abarbeitbar. Die Abarbeitung des Maschinencodes 6 durch die Steuereinrichtung 4 bewirkt, dass die Steuereinrichtung 4 mindestens eine der lagegeregelten Achsen 1 gemäß einem Steuerverfahren steuert, das nachstehend näher erläutert wird.

Der guten Ordnung halber sei erwähnt, dass die Steuereinrichtung 4 nach Bedarf auch alle lagegeregelten Achsen 1 der Maschine oder zumindest mehrere der lagegeregelten Achsen 1 gemäß dem nachstehend erläuterten Steuerverfahren steuern kann. Entscheidend ist, dass dies bei mindestens einer der lagegeregelten Achsen 1 erfolgt. Nachstehend wird das Steuerverfahren daher auch nur für eine der lagegeregelten Achsen 1 erläutert. Es wird daher nachstehend auch nur stets von "der lagegeregelten Achse 1" gesprochen. Falls das Steuerverfahren für mehrere oder alle lagegeregelten Achsen 1 implementiert wird, ist es in der Regel für alle derartigen Achsen 1 in gleichartiger Weise implementiert. Auch dies ist jedoch nicht zwingend erforderlich. Es ist möglich, für die einzelnen lagegeregelten Achsen verschiedene Ausgestaltungen der vorliegenden Erfindung zu implementieren.

Der Steuereinrichtung 4 wird eine Abfolge von Steuerbefehlen C vorgegeben. Die Steuerbefehle C legen für die lagegeregelte Achse 1 eine Abfolge von idealen Lagesollwerten x* fest. Beispielsweise können die Steuerbefehle C der Steuereinrichtung 4 mittels eines Teileprogramms 7 vorgegeben werden, das für mehrere Achsen 1 der Maschine eine miteinander koordinierte Abfolge von jeweiligen Lagesollwerten x* definiert, so dass die koordinierte Abfolge eine von dem Werkzeug 2 relativ zum Werkstück 3 abzufahrende Bahn und damit für die Achsen 1 jeweils eine Sequenz von eng aufeinanderfolgenden Lagesollwerten x* für die jeweilige Achse 1 definiert.

Die idealen Lagesollwerte x* folgen als Funktion der Zeit t in einem geringen, in der Regel konstanten zeitlichen Abstand δt aufeinander. Die Abfolge von idealen Lagesollwerten x* weist entsprechend der Darstellung in FIG 2 eine Anzahl von aufeinanderfolgenden Abschnitten auf. Die Grenzen der Abschnitte sind in FIG 2 durch gestrichelte vertikale Linien angedeutet. Ersichtlich sind innerhalb eines jeweiligen Abschnitts die idealen Lagesollwerte x* entweder monoton ansteigend oder monoton absteigend, meist sogar entweder streng monoton ansteigend oder streng monoton absteigend. Innerhalb eines einzelnen Abschnitts erfolgt also keine Richtungsumkehr der lagegeregelten Achse 1. Von Abschnitt zu Abschnitt erfolgt hingegen eine derartige Richtungsumkehr. Von Abschnitt zu Abschnitt wechselt somit die Differenz unmittelbar aufeinanderfolgender idealer Lagesollwerte x* ihr Vorzeichen. Wenn also - rein beispielhaft - in einem bestimmten Abschnitt jeder Lagesollwert x* größer (bzw. zumindest nicht kleiner) als der unmittelbar vorhergehende Lagesollwert x* ist, so ist im unmittelbar nachfolgenden Abschnitt jeder Lagesollwert x* kleiner (bzw. zumindest nicht größer) als der unmittelbar vorhergehende Lagesollwert x*. Ob die idealen Lagesollwerte x* - so wie in FIG 2 dargestellt - positiv sind oder negativ sind
oder teilweise positiv und teilweise negativ sind, ist im Rahmen der vorliegenden Erfindung hingegen von untergeordneter Bedeutung.

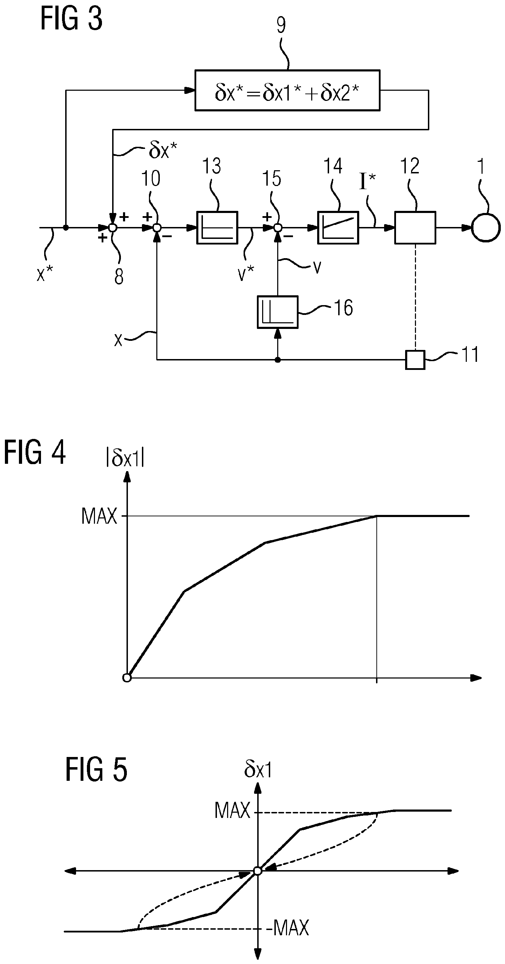

Die Steuereinrichtung 4 implementiert aufgrund der Abarbeitung des Maschinencodes 6 - in der Regel in Software - eine Lageregelung. Der Aufbau und die Funktion der Lageregelung werden nachstehend in Verbindung mit FIG 3 für die Verarbeitung eines einzelnen idealen Lagesollwert x* näher erläutert. Es sei jedoch nochmals darauf hingewiesen, dass die erläuterte Vorgehensweise jeweils mit dem zeitlichen Abstand δt mit dem jeweils nächsten idealen Lagesollwert x* wiederholt wird.

Gemäß FIG 3 führt die Steuereinrichtung 4 den jeweiligen idealen Lagesollwert x* einem Knotenpunkt 8 und einem Ermittlungsblock 9 zu. Der Ermittlungsblock 9 ermittelt einen jeweiligen Zusatzsollwert δx*, der ebenfalls dem Knotenpunkt 8 zugeführt wird. Die Wirkungsweise des Ermittlungsblocks 9 wird später noch näher erläutert werden. In dem Knotenpunkt 8 wird der jeweilige Zusatzsollwert δx* zum jeweiligen idealen Lagesollwert x* addiert. Dadurch wird ein jeweiliger resultierender Lagesollwert x*+δx* ermittelt.

Den jeweiligen resultierenden Lagesollwert x*+δx* führt die Steuereinrichtung 4 einem weiteren Knotenpunkt 10 zu. Dem weiteren Knotenpunkt 10 führt die Steuereinrichtung 4 weiterhin einen jeweiligen Lageistwert x zu. Der jeweilige Lageistwert x kann beispielsweise mittels eines üblichen Lagegebers 11 erfasst werden, der die Lage eines Aktors 12 erfasst, mittels dessen die lagegeregelte Achse 1 verstellt wird.

In dem Knotenpunkt 10 wird die Differenz des jeweiligen resultierenden Lagesollwerts x*+δx* und des jeweiligen Lageistwerts x ermittelt. Die jeweilige Differenz - in Fachkreisen meist als Regeldifferenz bezeichnet - wird einem Lageregler 13 zugeführt. Der Lageregler 13 kann beispielsweise entsprechend der Darstellung in FIG 3 als P-Regler ausgebildet sein. Er kann aber auch anders ausgebildet sein, beispielsweise als PI-Regler. Der Lageregler 13 ermittelt anhand der ihm zugeführten jeweiligen Regeldifferenz ein jeweiliges erstes Stellsignal v* für den Aktor 12. Er regelt dadurch eine Lage x der lagegeregelten Achse 1 entsprechend dem jeweiligen resultierenden Lagesollwert x*+δx*.

Es ist möglich, dass das erste Stellsignal v* direkt auf den Aktor 12 wirkt. In der Regel implementiert die Steuereinrichtung 4 jedoch entsprechend der Darstellung in FIG 3 einen Geschwindigkeitsregler 14, der dem Lageregler 13 unterlagert ist. In diesem Fall regelt der Lageregler 13 die Lage der lagegeregelten Achse 1 indirekt. Weiterhin ist in diesem Fall das jeweilige erste Stellsignal v* ein jeweiliger idealer Geschwindigkeitssollwert v*. Der Geschwindigkeitsregler 14 kann beispielsweise als P-Regler oder als PI-Regler ausgebildet sein. Auch andere Ausgestaltungen sind möglich.

Im Falle der indirekten Regelung führt der Lageregler 13 das jeweilige erste Stellsignal v* also nicht direkt dem Aktor 12 zu. Vielmehr führt der Lageregler 13 das jeweilige erste Stellsignal v* zunächst einem weiteren Knotenpunkt 15 zu. Die Steuereinrichtung 4 führt dem weiteren Knotenpunkt 15 weiterhin einen jeweiligen Geschwindigkeitsistwert v zu. Die Steuereinrichtung 4 kann den jeweiligen Geschwindigkeitsistwert v beispielsweise dadurch ermitteln, dass sie in einem Differenzierer 16 eine Differenzierung des Lageistwerts x (also der Ermittlung der zeitlichen Ableitung des Lageistwerts x) vornimmt. Es sind aber auch andere Möglichkeiten gegeben, beispielsweise eine direkte Erfassung des Geschwindigkeitsistwerts v. In dem weiteren Knotenpunkt 15 bildet die Steuereinrichtung 4 die Differenz des jeweiligen idealen Geschwindigkeitssollwerts v* und des jeweiligen Geschwindigkeitsistwerts v. Die so gebildete Differenz wird dem Geschwindigkeitsregler 14 zugeführt.

Der Geschwindigkeitsregler 14 ermittelt anhand der Differenz des jeweiligen idealen Geschwindigkeitssollwerts v* und des jeweiligen Geschwindigkeitsistwerts v ein jeweiliges zweites Stellsignal I* für den Aktor 12. Der Geschwindigkeitsregler 14 regelt somit die Geschwindigkeit v der Achse 1 entsprechend dem jeweiligen Geschwindigkeitssollwert v*.

Analog zur Wirkungsweise des Lagereglers 13 kann der Geschwindigkeitsregler 14 direkt oder indirekt auf den Aktor 12 wirken. Beispielsweise ist es entsprechend der Darstellung in FIG 3 möglich, dass anhand des jeweiligen zweiten Stellsignals I* direkt eine Ansteuerung des Aktors 12 erfolgt, beispielsweise im Falle einer elektrischen Maschine eine Ansteuerung eines Umrichters. Im Falle einer indirekten Wirkung ist es beispielsweise möglich, dass dem Geschwindigkeitsregler 14 ein weiterer Regler unterlagert ist, insbesondere ein Stromregler. Dies ist in FIG 3 jedoch nicht mit dargestellt.

Der jeweilige Zusatzsollwert δx* umfasst entsprechend der Darstellung in FIG 3 Insbesondere zumindest einen ersten Anteil δx1*. Der erste Anteil δx1* ist ausschließlich von einer Lagedifferenz abhängig. Die Lagedifferenz ist die Differenz des jeweiligen idealen Lagesollwerts x* vom ersten idealen Lagesollwert x* des jeweiligen Abschnitts der Abfolge von idealen Lagesollwerten x*. FIG 4 zeigt diese Abhängigkeit. Auf der Abszisse ist der Betrag der Lagedifferenz aufgetragen, also der zurückgelegte Weg ab Beginn des Verfahrens in der momentanen Verfahrrichtung bzw. - hiermit gleichwertig - ab Beginn der letzten bereits erfolgten Richtungsumkehr. Auf der Ordinate sind die zugehörigen Beträge der ersten Zusatzsollwerte δx1* aufgetragen. Entsprechend der Darstellung in FIG 4 steigt der Betrag des ersten Anteils δx1* mit zunehmendem Betrag der Lagedifferenz monoton an. In einem ersten Bereich, also bis der Betrag der Lagedifferenz eine vorbestimmte Obergrenze erreicht, steigt der Betrag des ersten Anteils δx1* mit zunehmendem Betrag der Lagedifferenz streng monoton an. Die Obergrenze selbst weist einen Wert größer als 0 auf.

In der Regel ist der Betrag des ersten Anteils δx1* ab der unteren Obergrenze konstant. Alternativ kann der Betrag des ersten Anteils δx1* ab der unteren Obergrenze bis zu einer oberen Obergrenze monoton ansteigen. In diesem Fall ist der Betrag des ersten Anteils δx1* ab Erreichen der oberen Obergrenze konstant.

Innerhalb der Abschnitte der Abfolge von idealen Lagesollwerten x* weisen die ersten Anteile δx1* einheitlich dasselbe Vorzeichen auf. Insbesondere ist der erste Anteil δx1* entsprechend der Darstellung in FIG 5 stets positiv, wenn die idealen Lagesollwerte x* monoton ansteigend sind. Umgekehrt ist der jeweilige Zusatzsollwert δx* entsprechend der Darstellung in FIG 5 stets negativ, wenn die idealen Lagesollwerte x* monoton absteigend sind. Beim Übergang von einem Abschnitt der Abfolge von idealen Lagesollwerten x* zum nächsten Abschnitt der Abfolge von idealen Lagesollwerten x* wechselt der erste Anteil δx1* somit sein Vorzeichen. Insbesondere erfolgt entsprechend der Darstellung in FIG 5 am Ende eines jeweiligen Abschnitts der Abfolge von idealen Lagesollwerten x* ein Sprung auf den ersten Anteil δx1*, der zu Beginn des nächsten Abschnitts angenommen wird. Dies ist in FIG 5 durch die beiden gestrichelt eingezeichneten geschwungenen Pfeile angedeutet.

Es ist möglich, dass der Betrag des ersten Anteils δx1* bereits zu Beginn eines jeweiligen Abschnitts der Abfolge von idealen Lagesollwerten x* einen bestimmten, von Null verschiedenen Betrag aufweist. Vorzugsweise weist der erste Anteil δx1* zu Beginn eines jeweiligen Abschnitts der Abfolge von idealen Lagesollwerten x* entsprechend der Darstellung in den FIG 4 und 5 jedoch den Wert Null auf. Weiterhin nimmt entsprechend der Darstellung in den FIG 4 und 5 der Betrag des ersten Anteils δx1* einen vorbestimmten Maximalwert MAX an, sobald der Betrag der Lagedifferenz eine vorbestimmte Schranke erreicht. Danach wird der erste Anteil δx1* innerhalb des jeweiligen Abschnitts der Abfolge von idealen Lagesollwerten nicht mehr weiter erhöht, sondern konstant beibehalten. Die erwähnte vorbestimmte Schranke entspricht - je nach Ausgestaltung - entweder der unteren Obergrenze oder der oberen Obergrenze.

Unterhalb der genannten Schranke sind verschiedene Vorgehensweisen möglich. Beispielsweise kann ein linearer, ein abschnittsweise linearer oder ein sich kontinuierlich abschwächender Anstieg auf den Maximalwert MAX erfolgen. Auch die Art und Weise, auf welche der jeweilige erste Anteil δx1* ermittelt wird, ist sekundärer Natur. Beispielsweise kann der funktionale Verlauf durch eine Tabelle oder durch Funktionen definiert sein. Ein Füllen der Tabelle mit Werten oder eine Parametrierung der Funktionen kann beispielsweise aufgrund von Versuchsfahrten vorgenommen werden. Eingangsgröße in die Tabelle bzw. in die Funktionen ist der seit der letzten Richtungsumkehr programmierte ideale Verfahrweg. Ausgangsgröße ist der jeweilige erste Anteil δx1*.

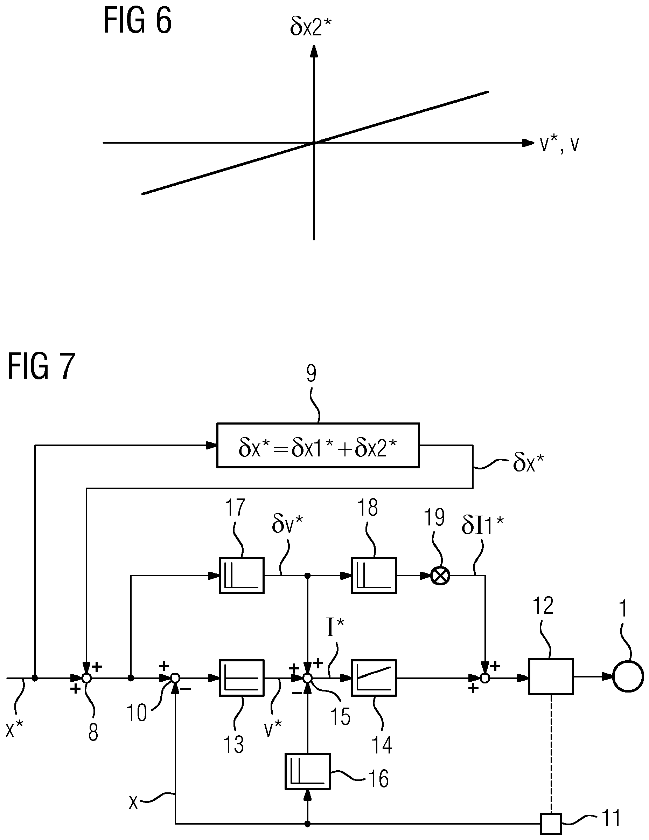

Es ist möglich, dass die Zusatzsollwerte δx* ausschließlich den ersten Anteil δx1* umfassen. In diesem Fall ergibt sich sofort und ohne weiteres, dass mit den ersten Anteilen δx1* innerhalb der Abschnitte der Abfolge von idealen Lagesollwerten x* auch der jeweilige Zusatzsollwert δx* positiv ist, wenn die idealen Lagesollwerte x* monoton ansteigend sind, und umgekehrt negativ ist, wenn die idealen Lagesollwerte x* monoton absteigend sind. Vorzugsweise umfassen die Zusatzsollwerte δx* jedoch - in der Regel und entsprechend der Darstellung in FIG 3 zusätzlich zum ersten Anteil δx1*, in Ausnahmefällen alternativ dazu - einen zweiten Anteil δx2*. Der zweite Anteil δx2* ist von einer Verfahrgeschwindigkeit der mindestens einen Achse 1 abhängig. Insbesondere kann der zweite Anteil δx2* entsprechend der Darstellung in FIG 6 proportional zur Verfahrgeschwindigkeit der mindestens einen Achse 1 sein. Auch hier gilt entsprechend der Darstellung in FIG 6 jedoch - analog zum ersten Anteil δx1* -, dass der zweite Anteil δx2* stets positiv ist, wenn die idealen Lagesollwerte x* monoton ansteigend sind, und umgekehrt stets negativ ist, wenn die idealen Lagesollwerte x* monoton absteigend sind. Die Verfahrgeschwindigkeit kann je nachdem, ob sie aus den idealen Lagesollwerten x* wird oder aus den Lageistwerten x abgeleitet oder direkt erfasst wird, alternativ eine Sollgeschwindigkeit oder eine Istgeschwindigkeit sein.

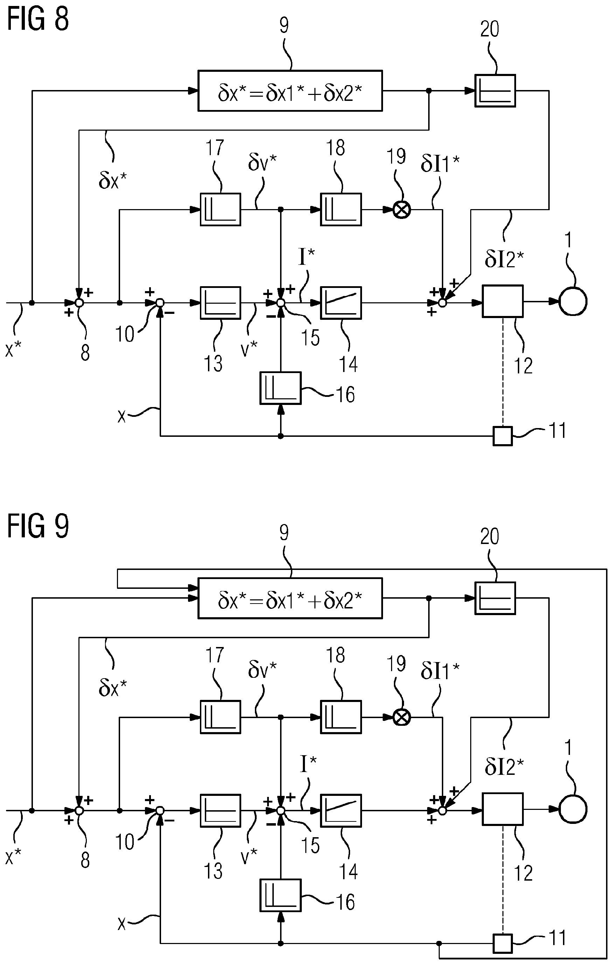

Die erfindungsgemäßen Ausgestaltungen können auf verschiedene Art und Weise modifiziert werden. Nachstehend werden zunächst zwei Ausgestaltungen erläutert, die entsprechend der Darstellung in FIG 7 vorzugsweise gemeinsam realisiert werden. Prinzipiell sind sie aber auch unabhängig voneinander realisierbar. Sodann wird in Verbindung mit FIG 8 eine weitere Ausgestaltung erläutert, die auf der Ausgestaltung gemäß FIG 7 aufbaut. Die zusätzliche Ausgestaltung gemäß FIG 8 ist aber auch losgelöst von den vorteilhaften Ausgestaltungen gemäß FIG 7 realisierbar.

Gemäß der Darstellung in FIG 7 ermittelt die Steuereinrichtung 4 in einem weiteren Ermittlungsblock 17 anhand der Abfolge von resultierenden Lagesollwerten x*+δx* ein jeweiliges erstes Vorsteuersignal δv*. Die Steuereinrichtung 4 kann in dem weiteren Ermittlungsblock 17 beispielsweise eine Differenzierung der resultierenden Lagesollwerte x*+δx* vornehmen, also deren zeitliche Ableitung ermitteln. In jedem Fall erfolgt die Ermittlung der ersten Vorsteuersignale δv* ohne Berücksichtigung des jeweiligen Lageistwertes x.

Falls die Steuereinrichtung 4 die ersten Vorsteuersignale δv* ermittelt, ermittelt die Steuereinrichtung 4 durch Addition des jeweiligen ersten Vorsteuersignals δv* auf den jeweiligen idealen Geschwindigkeitssollwert v* einen jeweiligen resultierenden Geschwindigkeitssollwert v*+δv*. In diesem Fall erfolgt mittels des Geschwindigkeitsreglers 14 eine Geschwindigkeitsregelung auf den resultierenden Geschwindigkeitssollwert v*+δv*. Der jeweilige resultierende Geschwindigkeitssollwert v*+δv* ist also zwar nicht mehr mit dem jeweiligen idealen Geschwindigkeitssollwert v* identisch, hängt aber immer noch vom jeweiligen idealen Geschwindigkeitssollwert v* ab. Insbesondere ist der Unterschied nur das entsprechende jeweilige erste Vorsteuersignal δv*.

Weiterhin ermittelt die Steuereinrichtung 4 gemäß der Darstellung in FIG 7 anhand der Abfolge von resultierenden Lagesollwerten x*+δx* ein jeweiliges zweites Vorsteuersignal δI1*. Die Steuereinrichtung 4 kann beispielsweise in einem weiteren Ermittlungsblock 18 eine nochmalige Differenzierung des bereits ermittelten jeweiligen ersten Vorsteuersignals δv* und sodann durch eine Skalierung des so ermittelten Zwischensignals in einem Multiplizierer 19 das jeweilige zweite Vorsteuersignal δI1* ermitteln. Es ist aber auch eine direkte Ermittlung des jeweiligen zweiten Vorsteuersignals δI1* ohne vorherige Ermittlung des jeweiligen ersten Vorsteuersignals δv* möglich. In jedem Fall erfolgt auch die Ermittlung der zweiten Vorsteuersignale δI1* ohne Berücksichtigung des jeweiligen Lageistwertes x.

Falls die Steuereinrichtung 4 die zweiten Vorsteuersignale δI1* ermittelt, ermittelt die Steuereinrichtung 4 durch Addition des jeweiligen zweiten Vorsteuersignals δI1* auf das jeweilige zweite Stellsignal I* ein jeweiliges drittes Stellsignal 1*+δI1*. In diesem Fall führt der Geschwindigkeitsregler 14 das jeweilige zweite Stellsignal I* also nicht direkt dem Aktor 12 zu. Vielmehr wird zuvor das jeweilige dritte Stellsignal I*+δI1* ermittelt. Der Aktor 12 wird in diesem Fall entsprechend der Darstellung in FIG 7 entsprechend dem jeweiligen dritten Stellsignal I*+δI1* angesteuert.

Entsprechend der Ausgestaltung gemäß FIG 8 ermittelt die Steuereinrichtung 4 weiterhin in einem weiteren Ermittlungsblock 20 anhand der Abfolge von Zusatzsollwerten δx* ein jeweiliges drittes Vorsteuersignal δI2*. Diese Ermittlung erfolgt ohne Berücksichtigung weiterer variabler Größen. Das jeweilige dritte Vorsteuersignal δI2* addiert die Steuereinrichtung 4 - entsprechend der Darstellung in FIG 8 zusätzlich zum jeweiligen zweiten Vorsteuersignal δI1*, prinzipiell aber unabhängig hiervon - auf das jeweilige zweite Stellsignal I* auf. Dadurch ermittelt die Steuereinrichtung 4 in der Ausgestaltung gemäß FIG 8 das jeweilige endgültige Stellsignal, mit dem der Aktor 12 angesteuert wird.

Soweit bisher erläutert, entspricht die Lagedifferenz, anhand derer der jeweilige erste Anteil δx1* des jeweiligen Zusatzsollwertes δx* ermittelt wird, der Differenz des jeweiligen idealen Lagesollwerts x* vom ersten idealen Lagesollwert x* des jeweiligen Abschnitts. Es ist jedoch alternativ möglich, dass die Lagedifferenz der Differenz des jeweiligen idealen Lagesollwerts x* vom jeweiligen Lageistwert x entspricht. In diesem Fall muss lediglich dem Ermittlungsblock 9 zusätzlich zum jeweiligen idealen Lagesollwert x* auch der Lageistwert x zu geführt werden. Die übrigen Ermittlungen können unverändert beibehalten werden. FIG 9 zeigt dies in entsprechender Modifikation der Ausgestaltung gemäß FIG 8. Die entsprechende Modifikation ist aber auch bei den Ausgestaltungen der FIG 3, 6 und 7 möglich.

Zusammengefasst betrifft die vorliegende Erfindung somit folgenden Sachverhalt:
Einer Steuereinrichtung 4 einer Maschine werden Steuerbefehle C vorgegeben, die für eine lagegeregelte Achse 1 der Maschine eine Abfolge von idealen Lagesollwerten x* festlegen. Diese Abfolge weist aufeinanderfolgende Abschnitte auf. Innerhalb der Abschnitte steigen die idealen Lagesollwerte x* entweder monoton an oder sie fallen monoton ab. Von Abschnitt zu Abschnitt wechselt die Richtung der Monotonie. Die Steuereinrichtung 4 implementiert einen Lageregler 13 und führt dem Lageregler 13 entsprechend der Abfolge von idealen Lagesollwerten x* resultierende Lagesollwerte x*+δx* und Lageistwerte x zu. Der Lageregler 13 ermittelt daraus Stellsignale v* für einen Aktor 12 der Achse 1 und regelt dadurch eine Lage x der Achse 1 entsprechend. Die resultierenden Lagesollwerte x*+δx* entsprechen den Summen der idealen Lagesollwerte x* und der Zusatzsollwerte δx*. Innerhalb der Abschnitte sind die Zusatzsollwerte δx* positiv, wenn die idealen Lagesollwerte x* monoton ansteigen. Fallen die idealen Lagesollwerte x* monoton ab, sind die Zusatzsollwerte δx* negativ. Die Zusatzsollwerte δx* umfassen einen ersten Anteil δx1*, der ausschließlich von einer Lagedifferenz abhängig ist. Die Lagedifferenz ist entweder die Differenz des jeweiligen idealen Lagesollwerts x* vom ersten idealen Lagesollwert x* des jeweiligen Abschnitts oder die Differenz des jeweiligen idealen Lagesollwerts x* vom jeweiligen Lageistwert x. Der Betrag des ersten Anteils δx1* der Zusatzsollwerte δx* steigt mit zunehmendem Betrag der Lagedifferenz anfänglich streng monoton und später zumindest monoton an.

Die vorliegende Erfindung weist viele Vorteile auf. Insbesondere können sowohl verformungsbedingte Schleppfehler als auch der geschwindigkeitsbedingte Schleppfehler auf effiziente Weise kompensiert werden. Weiterhin ist ein vom Aktor 12 entfernt angeordnetes weiteres Messsystem für die Erfassung der (tatsächlichen) Lage der mindestens einen lagegeregelten Achse 1 nicht erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für eine Maschine, die mindestens eine lagegeregelte Achse (1) aufweist,
- wobei einer Steuereinrichtung (4) der Maschine eine Abfolge von Steuerbefehlen (C) vorgegeben wird, die für die mindestens eine lagegeregelte Achse (1) eine Abfolge von idealen Lagesollwerten (x*) festlegen,
- wobei die Abfolge von idealen Lagesollwerten (x*) eine Anzahl von aufeinanderfolgenden Abschnitten aufweist,
- wobei innerhalb eines jeweiligen Abschnitts der Abfolge von idealen Lagesollwerten (x*) die idealen Lagesollwerte (x*) entweder monoton ansteigend oder monoton absteigend sind,
- wobei von Abschnitt zu Abschnitt der Abfolge von idealen Lagesollwerten (x*) die Differenz unmittelbar aufeinanderfolgender idealer Lagesollwerte (x*) ihr Vorzeichen wechselt,
- wobei die Steuereinrichtung (4) für die mindestens eine lagegeregelte Achse (1) einen Lageregler (13) implementiert,
- wobei die Steuereinrichtung (4) dem Lageregler (13) entsprechend der Abfolge von idealen Lagesollwerten (x*) eine Abfolge von resultierenden Lagesollwerten (x*+δx*) und einen jeweiligen Lageistwert (x) zuführt,
- wobei der Lageregler (13) anhand des ihm zugeführten jeweiligen resultierenden Lagesollwertes (x*+δx*) und des ihm zugeführten jeweiligen Lageistwertes (x) ein jeweiliges erstes Stellsignal (v*) für einen Aktor (12) der mindestens einen Achse (1) ermittelt und dadurch direkt oder indirekt eine Lage (x) der mindestens einen Achse (1) entsprechend dem jeweiligen resultierenden Lagesollwert (x*+δx*) regelt,
- wobei der jeweilige resultierende Lagesollwert (x*+δx*) sich durch Addition eines jeweiligen Zusatzsollwerts (δx*) auf den jeweiligen idealen Lagesollwert (x*) ergibt,
- wobei innerhalb der Abschnitte der Abfolge von idealen Lagesollwerten (x*) der jeweilige Zusatzsollwert (δx*) positiv ist, wenn die idealen Lagesollwerte (x*) monoton ansteigend sind, und negativ ist, wenn die idealen Lagesollwerte (x*) monoton absteigend sind,
**dadurch gekennzeichnet,**
- **dass** die Zusatzsollwerte (δx*) einen ersten Anteil (δx1*) umfassen, der ausschließlich von einer Lagedifferenz abhängig ist,
- **dass** die Lagedifferenz entweder die Differenz des jeweiligen idealen Lagesollwerts (x*) vom ersten idealen Lagesollwert (x*) des jeweiligen Abschnitts oder die Differenz des jeweiligen idealen Lagesollwerts (x*) vom jeweiligen Lageistwert (x) ist und
- **dass** der Betrag des ersten Anteils (δx1*) der Zusatzsollwerte (δx*) mit zunehmendem Betrag der Lagedifferenz anfänglich streng monoton und später zumindest monoton ansteigt.

2. Steuerverfahren nach Anspruch 1,
**dadurch gekennzeichnet,**
**dass** der Betrag des ersten Anteils (δx1*) einen vorbestimmten Maximalwert (MAX) annimmt, sobald der Betrag der Lagedifferenz eine Schranke erreicht, und danach innerhalb des jeweiligen Abschnitts der Abfolge von idealen Lagesollwerten (x*) konstant beibehalten wird.

3. Steuerverfahren nach Anspruch 1 oder 2,
**dadurch gekennzeichnet,**
**dass** der erste Anteil (δx1*) zu Beginn des jeweiligen Abschnitts der Abfolge von idealen Lagesollwerten (x*) den Wert Null aufweist.

4. Steuerverfahren nach Anspruch 1, 2 oder 3,
**dadurch gekennzeichnet,**
**dass** die Zusatzsollwerte (δx*) einen zweiten Anteil (δx2*) umfassen, der von einer Verfahrgeschwindigkeit (v*, v) der mindestens einen Achse (1) abhängig ist, insbesondere proportional zur Verfahrgeschwindigkeit (v*, v) der mindestens einen Achse (1) ist.

5. Steuerverfahren nach einem der obigen Ansprüche,
**dadurch gekennzeichnet,**
- **dass** die Steuereinrichtung (4) einen dem Lageregler (13) unterlagerten Geschwindigkeitsregler (14) implementiert,
- **dass** der Lageregler (13) das jeweilige erste Stellsignal (v*) nicht direkt dem Aktor (12) zuführt, sondern dem Geschwindigkeitsregler (14) einen jeweiligen resultierenden Geschwindigkeitssollwert (v*) und weiterhin einen jeweiligen Geschwindigkeitsistwert (v) zuführt, wobei der jeweilige resultierende Geschwindigkeitssollwert (v*, v*+δv*) vom jeweiligen ersten Stellsignal (v*) abhängt,
- **dass** der Geschwindigkeitsregler (14) anhand des jeweiligen resultierenden Geschwindigkeitssollwertes (v*, v*+δv*) und des jeweiligen Geschwindigkeitsistwertes (v) ein jeweiliges zweites Stellsignal (I*) für den Aktor (12) der mindestens einen Achse (1) ermittelt und dadurch direkt oder indirekt die Geschwindigkeit (v) der mindestens einen Achse (1) entsprechend dem jeweiligen resultierenden Geschwindigkeitssollwert (v*, v*+δv*) regelt.

6. Steuerverfahren nach Anspruch 5,
**dadurch gekennzeichnet,**
- **dass** die Steuereinrichtung (4) anhand der Abfolge von resultierenden Lagesollwerten (x*+δx*) ohne Berücksichtigung des jeweiligen Lageistwertes (x) ein jeweiliges erstes Vorsteuersignal (δv*) ermittelt und
- **dass** die Steuereinrichtung (4) den jeweiligen resultierenden Geschwindigkeitssollwert (v*+δv*) durch Addition des ersten Vorsteuersignals (δv*) auf den jeweiligen idealen Geschwindigkeitssollwert (v*) ermittelt.

7. Steuerverfahren nach Anspruch 5 oder 6,
**dadurch gekennzeichnet,**
- **dass** die Steuereinrichtung (4) anhand der Abfolge von resultierenden Lagesollwerten (x*+δx*) ohne Berücksichtigung des jeweiligen Lageistwertes (x) ein jeweiliges zweites Vorsteuersignal (δI1*) ermittelt und
- **dass** der Geschwindigkeitsregler (14) das jeweilige zweite Stellsignal (I*) nicht direkt dem Aktor (12) zuführt, sondern dass die Steuereinrichtung (4) durch Addition des jeweiligen zweiten Vorsteuersignals (δI1*) auf das jeweilige zweite Stellsignal (I*) ein jeweiliges drittes Stellsignal (I*+δI1*) für den Aktor (12) ermittelt und dass der Aktor (12) entweder entsprechend dem jeweiligen dritten Stellsignal (I*+δI1*) oder entsprechend einem aus dem jeweiligen dritten Stellsignal (I*+δI1*) abgeleiteten jeweiligen vierten Stellsignal (I*+δI1*+δI2*) angesteuert wird.

8. Steuerverfahren nach Anspruch 7,
**dadurch gekennzeichnet,**
- **dass** die Steuereinrichtung (4) anhand der Abfolge von resultierenden Lagesollwerten (x*+δx*) ohne Berücksichtigung des jeweiligen Lageistwertes (x) ein jeweiliges drittes Vorsteuersignal (δI2*) ermittelt und
- **dass** die Steuereinrichtung (4) durch Addition des jeweiligen dritten Vorsteuersignals (δI2*) auf das jeweilige dritte Stellsignal (I*+δI1*) das jeweilige vierte Stellsignal (I*+δI1*+δI2*) für den Aktor (12) ermittelt und
- **dass** der Aktor (12) mit dem jeweiligen vierten Stellsignal (I*+δI1*+δI2*) angesteuert wird.

9. Steuerverfahren nach Anspruch 5 oder 6,
**dadurch gekennzeichnet,**
- **dass** die Steuereinrichtung (4) anhand der Abfolge von resultierenden Lagesollwerten (x*+δx*) ohne Berücksichtigung des jeweiligen Lageistwertes (x) ein jeweiliges drittes Vorsteuersignal (δI2*) ermittelt und
- **dass** die Steuereinrichtung durch Addition des jeweiligen dritten Vorsteuersignals (δI2*) auf das jeweilige zweite Stellsignal (I*) ein jeweiliges resultierendes Stellsignal (I*+δI2*) für den Aktor (12) ermittelt, mit dem der Aktor (12) angesteuert wird.

10. Steuerprogramm für eine Steuereinrichtung (4) einer Maschine, die mindestens eine lagegeregelte Achse (1) aufweist, wobei das Steuerprogramm (5) Maschinencode (6) umfasst, der von der Steuereinrichtung (4) unmittelbar abarbeitbar ist, wobei die Abarbeitung des Maschinencodes (6) durch die Steuereinrichtung (4) bewirkt, dass die Steuereinrichtung (4) die mindestens eine lagegeregelte Achse (1) gemäß einem Steuerverfahren nach einem der obigen Ansprüche steuert.

11. Steuereinrichtung einer Maschine, die mindestens eine lagegeregelte Achse (1) aufweist, wobei die Steuereinrichtung mit einem Steuerprogramm (5) nach Anspruch 10 programmiert ist, so dass die Steuereinrichtung im Betrieb die mindestens eine lagegeregelte Achse (1) der Maschine gemäß einem Steuerverfahren nach einem der Ansprüche 1 bis 9 steuert.

12. Maschine, wobei die Maschine mindestens eine lagegeregelte Achse (1) aufweist, wobei die Maschine eine Steuereinrichtung (4) nach Anspruch 11 aufweist, wobei die Steuereinrichtung (4) im Betrieb die mindestens eine lagegeregelte Achse (1) der Maschine gemäß einem Steuerverfahren nach einem der Ansprüche 1 bis 9 steuert.

## Claims

1. Control method for a machine which has at least one position-controlled shaft (1),
- wherein a sequence of control commands (C) is specified for a control facility (4) of the machine, said sequence defining a sequence of ideal position target values (x*) for the at least one position-controlled shaft (1),
- wherein the sequence of ideal position target values (x*) has a number of successive sections,
- wherein within a respective section of the sequence of ideal position target values (x*), the ideal position target values (x*) either increase monotonically or decrease monotonically,
- wherein from section to section of the sequence of ideal position target values (x*), the difference between immediately successive ideal position target values (x*) changes its sign,
- wherein the control facility (4) for the at least one position-controlled shaft (1) implements a position controller (13),
- wherein, corresponding to the sequence of ideal position target values (x*), the control facility (4) feeds the position controller (13) a sequence of resulting position target values (x*+δx*) and a respective position actual value (x),
- wherein the position controller (13) determines a respective first actuating signal (v*) for an actuator (12) of the at least one shaft (1) on the basis of the respective resulting position target value (x*+δx*) fed to it and the respective position actual value (x) fed to it, and thereby controls a position (x) of the at least one shaft (1) directly or indirectly according to the respective resulting position target value (x*+δx*),
- wherein the respective resulting position target value (x*+δx*) is obtained by adding a respective additional target value (δx*) to the respective ideal position target value (x*),
- wherein within the sections of the sequence of ideal position target values (x*), the respective additional target value (δx*) is positive when the ideal position target values (x*) increase monotonically, and negative when the ideal position target values (x*) decrease monotonically,
**characterised in that**
- the additional target values (δx*) comprise a first component (δx1*) which is dependent exclusively on a position difference,
- the position difference is either the difference of the respective ideal position target value (x*) and the first ideal position target value (x*) of the respective section or the difference of the respective ideal position target value (x*) and the respective position actual value (x) and
- the absolute value of the first component (δx1*) of the additional target values (δx*) increases as the absolute value of the position difference increases, initially strictly monotonically and then at least monotonically.

2. Control method according to claim 1,
**characterised in that**
the absolute value of the first component (δx1*) assumes a predetermined maximum value (MAX) as soon as the absolute value of the position difference reaches a limit and is then kept constant within the respective section of the sequence of ideal position target values (x*).

3. Control method according to claim 1 or 2,
**characterised in that**
the first component (δx1*) has the value zero at the start of the respective section of the sequence of ideal position target values (x*).

4. Control method according to claim 1, 2 or 3,
**characterised in that**
the additional target values (δx*) comprise a second component (δx2*) which is dependent on a travel speed (v*, v) of the at least one shaft (1), in particular proportional to the travel speed (v*, v) of the at least one shaft (1).

5. Control method according to one of the above claims,
**characterised in that**
- the control facility (4) implements a speed controller (14) which is subordinate to the position controller (13),
- the position controller (13) does not directly feed the respective first actuating signal (v*) to the actuator (12), but rather feeds a respective resulting speed target value (v*) to the speed controller (14) and furthermore feeds a respective speed actual value (v), wherein the respective resulting speed target value (v*, v*+δv*) depends on the respective first actuating signal (v*),
- the speed controller (14) determines a respective second actuating signal (I*) for the actuator (12) of the at least one shaft (1) on the basis of the respective resulting speed target value (v*, v*+δv*) and of the respective speed actual value (v) and thereby directly or indirectly controls the speed (v) of the at least one shaft (1) in accordance with the respective resulting speed target value (v*, v*+δv*).

6. Control method according to claim 5,
**characterised in that**
- the control facility (4) determines a respective first precontrol signal (δv*) on the basis of the sequence of resulting position target values (x*+δx*) without taking into account the respective position actual value (x) and
- the control facility (4) determines the respective resulting speed target value (v*+δv*) by adding the first precontrol signal (δv*) to the respective ideal speed target value (v*).

7. Control method according to claim 5 or 6,
**characterised in that**
- the control facility (4) determines a respective second precontrol signal (δI1*) on the basis of the sequence of resulting position target values (x*+δx*) without taking into account the respective position actual value (x) and
- the speed controller (14) does not feed the respective second actuating signal (I*) directly to the actuator (12), but by adding the respective second precontrol signal (δI1*) to the respective second actuating signal (I*), the control facility (4) determines a respective third actuating signal (I*+δI1*) for the actuator (12) and the actuator (12) is activated either in accordance with the respective third actuating signal (I*+δI1*) or in accordance with a respective fourth actuating signal (I*+δI1*+δI2*) derived from the respective third actuating signal (I*+δI1*).

8. Control method according to claim 7,
**characterised in that**
- the control facility (4) determines a respective third precontrol signal (δI2*) on the basis of the sequence of resulting position target values (x*+δx*) without taking into account the respective position actual value (x) and
- the control facility (4) determines the respective fourth actuating signal (I*+δI1*+δI2*) for the actuator (12) by adding the respective third precontrol signal (δI2*) to the respective third actuating signal (I*+δI1*) and
- the actuator (12) is activated with the respective fourth actuating signal (I*+δI1*+δI2*).

9. Control method according to claim 5 or 6,
**characterised in that**
- the control facility (4) determines a respective third precontrol signal (δI2*) on the basis of the sequence of resulting position target values (x*+δx*) without taking into account the respective position actual value (x) and
- the control facility determines a respective resulting actuating signal (I*+δI2*) for the actuator (12) by adding the respective third precontrol signal (δI2*) to the respective second actuating signal (I*), by means of which actuating signal (I*+δI2*) the actuator (12) is activated.

10. Control program for a control facility (4) of a machine which has at least one position-controlled shaft (1), wherein the control program (5) comprises machine code (6) which can be directly processed by the control facility (4), wherein the processing of the machine code (6) by the control facility (4) causes the control facility (4) to control the at least one position-controlled shaft (1) according to a control method according to one of the preceding claims.

11. Control facility of a machine which has at least one position-controlled shaft (1), wherein the control facility is programmed with a control program (5) according to claim 10, so that during operation the control facility controls the at least one position-controlled shaft (1) of the machine according to a control method according to one of claims 1 to 9.

12. Machine, wherein the machine has at least one position-controlled shaft (1), wherein the machine has a control facility (4) according to claim 11, wherein, during operation, the control facility (4) controls the at least one position-controlled shaft (1) of the machine according to a control method according to one of claims 1 to 9.

## Revendications

1. Procédé de commande d'une machine, qui a au moins un axe (1) réglé en position,
- dans lequel on prescrit à un dispositif (4) de commande de la machine une suite d'instructions (C) de commande, qui fixe pour le au moins un axe (1) réglé en position une suite de valeurs (x*) idéales de consigne de position,
- dans lequel la suite de valeurs (x*) idéales de consigne de position a un certain nombre de segments successifs,
- dans lequel dans un segment respectif de la suite de valeurs (x*) idéales de consigne de position des valeurs (x*) idéales de consigne de position croissent de manière monotone ou décroissent de manière monotone,
- dans lequel d'un segment à l'autre de la suite de valeurs (x*) idéales de consigne de position, la différence entre des valeurs (x*) idéales de consigne de position se succédant directement change de signe,
- dans lequel le dispositif (4) de commande met en œuvre pour le au moins un axe (1) réglé en position un régleur (13) de position,
- dans lequel le dispositif (4) de commande envoie au régleur (13) de position conformément à la suite de valeurs (x*) idéales de consigne de position une suite de valeurs (x*+δx*) résultantes de consigne de position et une valeur (x) réelle de position respective,
- dans lequel le régleur (13) de position détermine à l'aide de la valeur (x*+δx*) de consigne de position résultante respective qui lui est envoyée et de la valeur (x) réelle de position respective qui lui est envoyée un premier signal (v*) de réglage d'un actionneur (12) du au moins un axe (1) et règle ainsi directement ou indirectement une position (x) du au moins un axe (1) conformément à la valeur (x*+δx*) de consigne de position résultante respective,
- dans lequel la valeur (x*+δx*) résultante respective s'obtient par addition d'une valeur (δx*) de consigne supplémentaire respective à la valeur (x*) idéale de consigne de position respective,
- dans lequel dans les segments de la suite de valeurs (x*) idéales de consigne de position, la valeur (δx*) de consigne supplémentaire respective est positive, si les valeurs (x*) idéales de consigne de position sont croissantes de manière monotone et négatives, si les valeurs (x*) idéales de consigne de position sont décroissantes de manière monotone, **caractérisé**
- **en ce que** les valeurs (δx*) de consigne supplémentaires comprennent une première proportion (δx1*), qui dépend exclusivement d'une différence de position,
- **en ce que** la différence de position est la différence de la valeur (x*) idéale de consigne de position respective à la première valeur (x*) idéale de consigne de position du segment respectif ou la différence de la valeur (x*) idéale de consigne de position respective à la valeur (x) réelle de position respective et
- **en ce que** le montant de la première proportion (δx1*) des valeurs (δx*) de consigne supplémentaires croît avec le montant croissant de la différence de position au début de manière strictement monotone et plus tard au moins de manière monotone.

2. Procédé de commande suivant la revendication 1,
**caractérisé**
**en ce que** le montant de la première proportion (δx1*) prend une valeur (MAX) maximum déterminée à l'avance dès que le montant de la différence de position atteint une borne et ensuite reste constant dans le segment respectif de la suite de valeurs (x*) idéales de consigne de position.

3. Procédé de commande suivant la revendication 1 ou 2, **caractérisé**
**en ce que** la première proportion (δx1*) a la valeur zéro au début du segment respectif de la suite de valeurs (x*) idéales de consigne de position.

4. Procédé de commande suivant la revendication 1, 2 ou 3, **caractérisé**
**en ce que** les valeurs (δx*) de consigne supplémentaires comprennent une deuxième proportion (δx2*), qui dépend d'une vitesse (v*, v) de déplacement du au moins un axe (1), en étant notamment proportionnelle à la vitesse (v*, v) de déplacement du au moins un axe (1).

5. Procédé de commande suivant l'une des revendications précédentes,
**caractérisé**
- **en ce que** le dispositif (4) de commande met en œuvre un régleur (14) de vitesse subordonné au régleur (13) de position,
- **en ce que** le régleur (13) de position n'envoie pas directement à l'actionneur (12) le premier signal (v*) de réglage respectif, mais envoie au régleur (14) de vitesse une valeur (v*) de consigne de vitesse résultante respective et en outre une valeur (v) réelle de vitesse respective, la valeur (v*, v*+δv*) de consigne de vitesse résultante respective dépendant du premier signal (v*) de réglage respectif,
- **en ce que** le régleur de vitesse détermine à l'aide de la valeur (v*, v*+δv*) de consigne de vitesse résultante respective et de la valeur (v) réelle de vitesse respective un deuxième signal (I*) de réglage respectif de l'actionneur (12) du au moins un axe (1) et règle ainsi directement ou indirectement la vitesse (v) du au moins un axe (1) conformément à la valeur (v*, v*+δv*) de consigne de vitesse résultante respective.

6. Procédé de commande suivant la revendication 5,
**caractérisé en ce que**
- le dispositif (4) de commande détermine à l'aide de la suite de valeurs (x*+δx*) de consigne de position résultante sans tenir compte de la valeur (x) réelle de position respective un premier signal (δv*) pilote respectif et
- **en ce que** le dispositif (4) de commande détermine la valeur (v*+δv*) de consigne de vitesse résultante respective par addition du premier signal (δv*) pilote à la valeur (v*) idéale de consigne de vitesse respective.

7. Procédé de commande suivant la revendication 5 ou 6,
**caractérisé**
- **en ce que** le dispositif (4) de commande détermine à l'aide de la suite de valeurs (x*+δx*) de consigne de position résultante sans tenir compte de la valeur (x) réelle de position respective un deuxième signal (δI1*) pilote respectif et
- **en ce que** le régleur (14) de vitesse n'envoie pas directement à l'actionneur le deuxième signal (I*) de réglage respectif, mais en ce que le dispositif (4) de commande détermine par addition du deuxième signal (δI1*) pilote respectif au deuxième signal (I*) de réglage respectif un troisième signal (I*+δI1*) de réglage respectif de l'actionneur (12) et en ce que l'on commande l'actionneur (12) soit conformément au troisième signal (I*+δI1*) soit conformément à un quatrième signal (I*+δI1*+δI2*) de réglage dérivé du troisième signal (I*+δI1*) de réglage respectif.

8. Procédé de commande suivant la revendication 7,
**caractérisé**
- **en ce que** le dispositif (4) de commande détermine à l'aide de la suite de valeurs (x*+δx*) de consigne de position résultante sans tenir compte de la valeur (x) réelle de position respective un troisième signal (δI2*) pilote respectif et
- **en ce que** le dispositif (4) de commande détermine par addition du troisième signal (δI2*) pilote respectif au troisième signal (I*+δI1*) de réglage respectif le quatrième signal (I*+δI1*+δI2*) de réglage respectif de l'actionneur (12) et
- **en ce que** l'on commande l'actionneur (12) par le quatrième signal (I*+δI1*+δI2*) de réglage respectif.

9. Procédé de commande suivant la revendication 5 ou 6,
**caractérisé**
- **en ce que** le dispositif (4) de commande détermine à l'aide de la suite de valeurs (x*+δx*) de consigne de position résultante sans tenir compte de la valeur (x) réelle de position respective un troisième signal (δI2*) pilote respectif et
- **en ce que** le dispositif de commande détermine par addition du troisième signal (δI2*) pilote respectif au deuxième signal (I*) de réglage respectif un signal (I*+δI2*) de réglage résultant de l'actionneur (12), par lequel l'actionneur (12) est commandé.

10. Programme de commande d'un dispositif (4) de commande d'une machine, qui a au moins un axe (1) réglé en position, dans lequel le programme (5) de commande comprend un code machine (6) qui peut être élaboré directement par le dispositif (4) de commande, l'élaboration du code machine (6) par le dispositif (4) de commande faisant que le dispositif (4) de commande commande le au moins un axe (1) réglé en position selon un procédé de commande suivant l'une des revendications précédentes.

11. Dispositif de commande d'une machine, qui a au moins un axe (1) réglé en position, le dispositif de commande étant programmé par un programme (5) de commande suivant la revendication 10 de manière à ce que le dispositif de commande commande en fonctionnement le au moins un axe (1) réglé en position de la machine selon un procédé de commande suivant l'une des revendications 1 à 9.

12. Machine, dans laquelle la machine a au moins un axe (1) réglé en position, la machine ayant un dispositif (4) de commande suivant la revendication 11, le dispositif (4) de commande commandant en fonctionnement le au moins un axe (1) réglé en position de la machine selon un procédé de commande suivant l'une des revendications 1 à 9.
